# EUROPÄISCHE PATENTSCHRIFT

(11) **EP 3 589 861 B1**
(45) Veröffentlichungstag und Bekanntmachung des Hinweises auf die Patenterteilung: **01.05.2024**
(21) Anmeldenummer: 18712534.9
(22) Anmeldetag: 12.03.2018
(51) Int. Cl.: F16F 13/10, F16F 13/14

(54) **MEMBRAN SOWIE HYDRAULISCH DÄMPFENDES LAGER**
MEMBRANE AND HYDRAULICALLY DAMPING BEARING
MEMBRANE ET PALIER À AMORTISSEMENT HYDRAULIQUE

(43) Veröffentlichungstag der Anmeldung: 08.01.2020
(73) Patentinhaber: Vibracoustic SE, 69469 Weinheim (DE)
(72) Erfinder: WERNER, Philipp, 21339 Lüneburg (DE); KARDOES, Hilrich, 21423 Winsen (DE); BREIDEN, Oliver, 21075 Hamburg (DE)
(74) Vertreter: Patentanwälte Olbricht Buchhold Keulertz
(86) Internationale Anmeldenummer: PCT/EP2018/056120
(87) Internationale Veröffentlichungsnummer: WO 2019/174715

(56) Entgegenhaltungen:
- JP-A- H08 152 041
- US-A- 4 936 556
- US-A1- 2013 038 006
- US-A1- 2013 187 318
- US-A1- 2018 066 726

## Beschreibung

Die vorliegende Erfindung betrifft eine Membran für ein hydraulisch dämpfendes Lager, insbesondere Zwischenmembran für ein hydraulisch dämpfendes Lager, die einen ersten Schenkel, einen zweiten Schenkel und eine die beiden Schenkel miteinander verbindende Basis aufweist. Ferner betrifft die Erfindung ein in axialer Richtung hydraulisch dämpfendes Lager, insbesondere ein in axialer Richtung hydraulisch dämpfendes Hilfsrahmenlager, ein in axialer Richtung hydraulisch dämpfendes Bodymount, ein in axialer Richtung hydraulisch dämpfendes Strebenlager oder ein in axialer Richtung hydraulisch dämpfendes Aggregatelager eines Kraftfahrzeugs mit einer derartigen Membran.

Hydraulisch dämpfende Lager der eingangs genannten Art werden auch als Hydrolager bezeichnet und als Fahrwerkslager, wie beispielsweise als Hilfsrahmenlager, Bodymount oder Strebenlager, oder als Aggregatelager in Kraftfahrzeugen eingesetzt, um auftretende Schwingungen zu dämpfen und/oder zu tilgen. Sie zeichnen sich durch ihre axial übereinander gestapelten Fluidkammern aus, die durch Membranen und/oder Elastomerkörper voneinander getrennt und über einen Dämpfungskanal flüssigkeitsleitend miteinander verbunden sind. Während einer Relativbewegung von Kern zu Außenhülse bzw. umgekehrt in axialer Richtung, wird eine der beiden Arbeitskammern komprimiert bzw. die andere vergrö-ßert. Dadurch strömt das darin befindliche Fluid über den Dämpfungskanal von der einen Kammer in die andere Arbeitskammer. Hierdurch wird ein Dämpfungs- und/oder Tilgungseffekt erzielt.

Die vorliegende Erfindung befasst sich mit einem hydraulisch dämpfenden Lager, das im Fahrwerksbereich und insbesondere zur Lagerung eines Hilfsrahmens eines Kraftfahrzeugs eingesetzt wird. Ein derartiges Lager kann auch als Hilfsrahmenlager bezeichnet werden und dient zur Abstützung und Dämpfung der auf einen Hilfsrahmen einwirkenden Kräfte und Schwingungen. Hierzu wird das Lager in einem in dem Hilfsrahmen ausgebildeten rohrförmigen Aufnahmeauge eingesetzt oder mit einem Flansch verschraubt. Dadurch wird der radiale Bauraum des axial dämpfenden Lagers durch den Durchmesser des Aufnahmeauges oder des Flansches begrenzt. In diesem radial begrenzten Bauraum wird ein Großteil des Lagers mit seinen Fluidkammern untergebracht. Dadurch sind die die Fluidkammern begrenzenden Membranen und/oder Elastomerkörper in ihrer Länge begrenzt und können somit nur eingeschränkte radiale und/oder axiale Auslenkungen des Hydrolagers lebensdauerfest ertragen. Hinzu kommt, dass die Membranen zusätzlich zu den translatorischen Auslenkungen noch aufgrund des dynamisch entstehen den Innendrucks in den Fluidkammern sich blähen. Darüber hinaus, wenn das Hilfsrahmenlager mit einer hohen axialen Vorlast beaufschlagt wird, kommen statische axiale Wege in der Konstruktionslage, die auch als KO-Lage bezeichnet wird, zustande, die im Fährbetrieb mit den dynamischen Wegen überlagert werden.

Aus DE 198 33 537 A1 geht ein elastisches Fahrwerkslager für die Lagerung einer Verbundlenkerachse, mit einem Axialbund, einem Radialgrundkörper und einem Radialausschlag hervor.

In US 4,936,556 B1 und US 9,470,286 B2 sind hydraulisch dämpfende Lager gezeigt, die einen Kern und eine den Kern umgebende Außenhülse aufweisen. Die Außenhülse weist Flanschabschnitte auf, um das Lager an einer Fahrzeugkarosserie zu befestigen. Zwischen dem Kern und der Außenhülse sind ein die axialen Lasten aufnehmender Elastomerkörper, eine Zwischenmembran und ein zweiter Elastomerkörper angeordnet. Der die axialen Lasten aufnehmende Elastomerkörper und die Zwischenmembran begrenzen eine erste Fluidkammer, und die Zwischenmembran und der zweite Elastomerkörper begrenzen eine zweite Fluidkammer, die über einen Dämpfungskanal miteinander verbunden sind.

In US 2018/066726 A1 weist ein hydraulisch dämpfendes Lager eine Zwischenmembran auf, die zwei Schenkel und eine U-förmige, die Schenkel verbindende Basis aufweist. Die Schenkel erstecken sich mit einer gleichbleibenden Dicke von der Basis. Der radial außenliegende Schenkel ist länger als der radial innenliegende Schenkel und weist einen dickeren Fußbereich als der innenliegende Schenkel auf.

In US 2013/187318 A1, der als nächstliegender Stand der Technik betrachtet ist, weist ein hydraulisch dämpfendes Lager eine Membran auf, die einen ersten Schenkel, einen zweiten Schenkel und eine die beiden Schenkel miteinander verbindende Basis aufweist, wobei eine mittlere Dicke eines der Schenkel mindestens doppelt so dick wie die des anderen Schenkels ist, wobei sich der Querschnitt des im Mittel mindestens doppelt so dicken Schenkels ausgehend von der Basis stetig erweitert, wobei der im Mittel mindestens doppelt so dicke Schenkel eine erste Länge und der andere Schenkel eine zweite Länge aufweist, wobei die erste Länge mindestens doppelt so groß wie die zweite Länge ist wobei der im Mittel mindestens doppelt so dicke Schenkel den radial außenliegenden Schenkel bildet.

Der vorliegenden Erfindung liegt die Aufgabe zugrunde, eine Membran und ein hydraulisch dämpfendes Lager zu schaffen, die eine große Beweglichkeit in den translatorischen Richtungen sowie eine hohe Blähsteifigkeit aufweisen und gleich zeitig eine verbesserte Dämpfung und eine hohe Lebensdauer aufweisen.

Der vorliegenden Erfindung liegt die Aufgabe zugrunde, eine Membran und ein hydraulisch dämpfendes Lager zu schaffen, die eine große Beweglichkeit in den translatorischen Richtungen sowie eine hohe Blähsteifigkeit aufweisen und gleichzeitig eine verbesserte Dämpfung und eine hohe Lebensdauer aufweisen.

Zur Lösung der Aufgabe wird eine Membran mit den Merkmalen des Anspruchs 1 und ein hydraulisch dämpfendes Lager mit den Merkmalen nach Anspruch 9 vor geschlagen.

Vorteilhafte Ausgestaltungen der Membran und des hydraulisch dämpfenden Lagers sind Gegenstand der jeweiligen abhängigen Ansprüche.

Unter X-Richtung wird im Folgenden die Richtung verstanden, in die sich ein Kraftfahrzeug bewegt. Unter Y-Richtung wird im Folgenden eine Richtung quer zur Fahrtrichtung verstanden, und unter Z-Richtung wird im Folgenden die Richtung in Höhe des Kraftfahrzeugs verstanden, welche die axiale Richtung des Lagers darstellt.

Gemäß einem Aspekt wird eine Membran für ein hydraulisch dämpfendes Lager, insbesondere eine Zwischenmembran für ein hydraulisch dämpfendes Lager, vor geschlagen, die einen ersten Schenkel, einen zweiten Schenkel und eine die bei den Schenkel miteinander verbindende Basis aufweist, wobei eine mittlere Dicke eines der Schenkel mindestens doppelt so dick wie die des anderen Schenkels ist.

Unter mittlerer Dicke wird im Sinne der Erfindung der Durchschnittswert der Dicke eines Schenkels über seine gesamte Länge, also von der Basis bis zu seinem freien Ende, verstanden.

Da die mittlere Dicke eines Schenkels mindestens doppelt so groß wie des anderen Schenkels ist, kann die Membran große Bewegungen in Axialrichtung und/oder in Radialrichtungen durchführen. Zudem ist die Membran unempfindlich gegenüber einem Aufblähen aufgrund hoher Differenzdrücke zwischen den beiden mit Fluid gefüllten Fluidkammern. Dieses führt in den meisten Betriebszuständen zu einer hohen Blähsteifigkeit der Membran, was in einem großen Pumpvolumen und somit in einem verbesserten Dämpfungseffekt resultiert. Zudem gewährleistet diese Ausgestaltung, dass die Membran bei Differenzdrücken zwischen den Fluidkammern sehr steif ist. Erfindungsgemäß ist die Basis U-förmig mit einer einheitlichen Dicke ausgebildet, wobei die Schenkel von der U-förmigen Basis abragen. In einer vorteilhaften Ausgestaltung ist die Membran weitestgehend rotationssymmetrisch um eine Symmetrieachse.

Der Querschnitt des im Mittel mindestens doppelt so dicken Schenkels erweitert sich ausgehend von der Basis. Der mindestens doppelt so dicke Schenkel erweitert sich stetig . Der im Mittel mindestens doppelt so dicke Schenkel kann beispielsweise ausgehend von der Basis trichterförmig zunehmen. Dadurch ist der mindestens doppelt so dicke Schenkel im Vergleich zu dem anderen Schenkel sehr blähsteif, gleichzeitig weist er aber bei großen translatorischen Auslenkungen eine harmonische Biegelinie auf, die zu einer geringen Dehnbeanspruchung und damit einer hohen Lebensdauer der Zwischenmembran führt. In einer vorteilhaften Ausführung biegt sich der im Mittel doppelt so dicke Schenkel bei einer Druckdifferenz, bei der die als Arbeitskammer ausgebildete Fluidkammer einen höheren Druck als die als Ausgleichskammer ausgebildete Fluidkammer aufweist, in Richtung des Kerns, wobei sich die die beiden Schenkel miteinander verbindende Basis an den Kern anlegt. In dieser Stellung ist die Membran besonders blähsteif, so dass eine hohe Pumpleistung und damit verbunden eine höhe Dämpfung erzielt werden kann. Erfindungsgemäß weist der im Mittel doppelt so dicke Schenkel eine erste Länge und der andere Schenkel weist eine zweite Länge auf, wobei die erste Länge größer als die zweite Länge ist. Dies ist notwendig, da der längere Schenkel für die hohe Beweglichkeit in translatorische Richtungen verantwortlich ist. Gleichzeitig führt eine größere Länge aber zu einer geringen Blähsteifigkeit und damit geringer Pumpleistung. Dieses wird durch die größere Dicke des längeren Schenkels kompensiert. So wird eine Membrangeometrie realisiert, die sich durch eine hohe Lebensdauer auszeichnet, gleichzeitig aber auch eine gute Pumpwirkung in axialer Richtung erlaubt. Erfindungsgemäß ist die erste Länge mindestens doppelt so groß wie die zweite Länge. Die obere Fläche und die untere Fläche der Membran können jeweils einen möglichst gleichmäßigen Verlauf aufweisen, so dass die Membran keine größeren Dickensprünge aufweist. Die Länge eines jeden Schenkels ist durch den Abstand in Z- Richtung zwischen dem unteren Umkehrpunkt der Basis dem höchsten Anbindungspunkt des jeweiligen Schenkels definiert.

Im Falle von möglichst gleichmäßig verlaufenden, Oberflächen der Membran, in Folge derer die Membran keine größeren Dickensprünge aufweist, ist die mathematische Ableitung der die obere Fläche beschreibenden Funktion im Umkehrpunkt der Basis gleich Null. Dasselbe gilt für die Ableitung der die untere Geometrie der Schenkel beschreibenden Funktionen, deren mathematische Ableitung an ihrem höchsten Punkt entweder auch zu null wird, alternativ in einen steifen Anbindungsbereich ausläuft oder eine Unstetigkeit aufweisen kann. Sinngemäß ist der obere Anbindungspunkt der radial außenliegenden Membran so definiert, dass jenseits von diesem Punkt keine nennenswerten Dehnungen im Elastomer der Anbindung durch die Bewegungen der Membran mehr auftreten.

Erfindungsgemäß bildet der im Mittel mindestens doppelt so dicke Schenkel den radial außenliegenden Schenkel. Hierdurch ergibt sich eine bessere Kombination aus Biegelinie des radial außenliegenden Schenkels und einer Rollfalte in der Basis und dadurch eine höhere Lebensdauer, wenn eine Bewegung in Z-Richtung mit einer Bewegung in Y-Richtung überlagert wird. Darüber hinaus wird eine bessere Abstützung der Basis gegen eine Innenhülse und/oder einem Kern eines hydraulisch dämpfenden Lagers erzielt.

In einer vorteilhaften Ausgestaltung weisen die Schenkel an ihren Extremitäten einen Verbindungsabschnitt auf, die formschlüssig, kraftschlüssig und/oder stoffschlüssig mit einem Kern beziehungsweise einem Innenrohr und/oder einem Außenrohr eines hydraulisch dämpfenden Lages verbindbar sind. Die Verbindungsabschnitte können endseitig mit Befestigungselementen zur Befestigung an einem Außenrohr oder einem Kern beziehungsweise einem Innenrohr versehen sein.

In einer vorteilhaften Ausgestaltung sind die einander zugewandten Oberflächen von Verbindungsabschnitt und/oder Innenhülse und radial innenliegendem Schenkel zueinander beabstandet, wobei ein Abstand A zwischen ca. 1 mm und ca. 10 mm beträgt. Vorteilhaft beträgt der Abstand A zwischen ca. 2 mm und ca. 3 mm. Dadurch werden bei großen Amplituden eine hohe Pumpleistung und damit eine hohe Dämpfung erzielt. Indem der Abstand möglichst klein ausgeführt wird, kann sich die Basis der Membran bei großen Amplituden an der Innenhülse anlegen und dadurch blähsteifer werden, was zu einer hohen Pumpwirkung und damit ho hem Dämpfungsvermögen oder Tilgereffekt des Lagers führt.

In einer vorteilhaften Ausgestaltung sind die Verbindungsabschnitte mit einer Innenhülse und/oder einer Außenhülse verbunden, wobei die Innenhülse auf den Kern aufschiebbar und die Außenhülse in das Außenrohr einsetzbar ist. Dadurch kann die Membran als ein separates Bauteil gefertigt und anschließend auf einen Kern, insbesondere ein Innenrohr, montiert beziehungsweise in ein Außenrohr eingesetzt werden. Die Innenhülse kann auf einen Kern aufgepresst und die Außenhülse kann in ein Außenrohr eingepresst sein. Die Innenhülse kann hierzu einen Durchmesser aufweisen, der kleiner ist als der Außendurchmesser des Kerns und die Außenhülse kann einen Außendurchmesser aufweisen, der größer ist als der Innendurchmesser des Außenrohrs. Die Innenhülse und die Außenhülse können stoffschlüssig mit der Zwischenmembran verbunden sein. Die Innenhülse und die Außenhülse können aus Metall oder Kunststoff gefertigt sein In einer vorteilhaften Ausgestaltung ist in die Außenhülse der Membran ein Dämpfungskanal eingebracht.

Gemäß einem weiteren Aspekt wird ein in axialer Richtung hydraulisch dämpfendes Lager, insbesondere ein in axialer Richtung hydraulisch dämpfendes Hilfsrahmenlager, ein in axialer Richtung hydraulisch dämpfendes Bodymount, ein in axialer Richtung hydraulisch dämpfendes Strebenlager oder ein in axialer Richtung hydraulisch dämpfendes Aggregatelager, das in ein Aufnahmeauge eines Kraftfahrzeugs einsetzbar ist, vorgeschlagen. Das hydraulisch dämpfende Lager weist einen Kern und ein den Kern umgebendes Außenrohr auf, wobei zwischen dem Kern und dem Außenrohr ein erster Elastomerkörper, eine Membran und ein zweiter Elastomerkörper angeordnet sind, wobei der erste Elastomerkörper und die Membran eine erste Fluidkammer und die Membran und der zweite Elastomerkörper eine zweite Fluidkammer begrenzen, und wobei die Fluidkammern mit einem Fluid gefüllt und über einen Dämpfungskanal fluidleitend miteinander verbunden sind.

Da das hydraulisch dämpfende Lager die erfindungsgemäße Membran umfasst, weist das hydraulisch dämpfende Lager eine hohe Blähsteifigkeit, eine große Pumpleistung und daraus resultierend einen verbesserten Dämpfungs- bzw. Tilgereffekt auf.

Die von dem ersten Elastomerkörper und der Membran begrenzte erste Fluidkammer kann auch als Arbeitskammer bezeichnet werden und die von der Membran und dem zweiten Elastomerkörper begrenzte zweite Fluidkammer kann auch als Ausgleichskammer bezeichnet werden.

Der erste Elastomerkörper kann geometrisch in der Art ausgeführt sein, dass er in einem Vulkanisationswerkzeug ohne sich seitlich öffnende Leisten herzustellen ist. Dadurch ist der erste Elastomerkörper einfach und kostengünstig herstellbar.

In einer vorteilhaften Ausgestaltung kann zwischen dem Kern und dem Außenrohr ein dritter Elastomerkörper angeordnet sein.

In einer vorteilhaften Ausgestaltung ist der erste Elastomerkörper ein Axiallager. Der dritte Elastomerkörper kann ein Radiallager sein. In einer vorteilhaften Ausgestaltung ist in den dritten Elastomerkörper wenigstens ein Zwischenblech eingebracht. In einer vorteilhaften Ausgestaltung ist der zweite Elastomerkörper eine Ausgleichsmembran.

Bei dem hydraulisch dämpfenden Lager weist der als Axiallager ausgebildete erste Elastomerkörper in Z-Richtung im Vergleich zu den radialen Richtungen X und Y eine höhere Steifigkeit auf. Der als Radiallager ausgebildete dritte Elastomerkörper hingegen besitzt gegenüber dem Axiallager eine hohe Steifigkeit in Y-Richtung. In vorteilhafter Ausgestaltung weist das Radiallager eine geringe Steifigkeit in Z-Richtung auf. Durch diese konsequente Aufteilung der Gesamtsteifigkeit des Lagers in die Steifigkeitsbeiträge in X- und Z-Richtung können die Wunschkennungen des Lagers besonders einfach konstruktiv eingestellt werden. Darüber hinaus kann auf diese Art ein Lager geschaffen werden, welches sich durch eine hohe Lebensdauer und eine verbesserte Dämpfung bzw. Tilgung auszeichnet.

Das Axiallager kann hohe statische, axiale Vorlasten beziehungsweise Lasten in Z-Richtung während des Betriebes über die vorgesehene Lebensdauer hinweg aufzunehmen.

Da das Radiallager die Steifigkeit in Y-Richtung und das Axiallager die Steifigkeit in Z-Richtung dominiert, kann das axial dämpfende Hydrolager einfach auf die Z-Wunschkennung und Z-Progression abgestimmt werden.

Zudem, da das Axiallager hohe axiale Vorlasten in Z-Richtung aufnehmen kann, können die Ausgleichsmembran, die Zwischenmembran und das Radiallager während der Montage vorgespannt eingebaut werden, so dass sie in der KO-Lage aufgrund der auf das Lager wirkenden axialen Vorlast in Z-Richtung eine reduzierte bis gar keine axiale Auslenkung aufweisen. Dies begünstigt die Lebensdauerfestigkeit der Ausgleichsmembran, der Zwischenmembran und des Radiallagers.

Die Aufnahme der Vorlasten in Z-Richtung durch das Axiallager führt ferner dazu, dass das Elastomer im Radiallager keine oder nur geringere vorlastbedingte Dehnungen aufweist. Dadurch kann das Radiallager mit einer geringen Gummidicke und somit einer hohen Steifigkeit in Y-Richtung konstruiert werden, ohne die Lebensdauer des Radiallagers durch die hohe Vorlast, die auf das Lager wirkt, negativ zu beeinflussen. Dadurch ist die Wahrscheinlichkeit groß, dass große Elastomer- oder Gummispuren mit aufwendigen Zwischenblechkonstruktionen zur Einstellung der geforderten Steifigkeitsverhältnisse vermieden werden können.

Werden jedoch hohe Steifigkeiten in Y-Richtung gefordert, so weist das Lager in vorteilhafter Ausgestaltung neben der Ausgleichsmembran ein separates Radiallager mit Zwischenblech auf, welches eine Steifigkeit in Y-Richtung besitzen kann, die mindestens um den Faktor 10 größer ist als seine Steifigkeit in Z-Richtung.

Weiterhin vorteilhaft kann das Axiallager eine Steifigkeit in Z-Richtung aufweisen, die mindestens um den Faktor 2 größer ist als die Steifigkeit des Radiallagers in Z-Richtung.

In einer vorteilhaften Ausgestaltung ist der erste Elastomerkörper formschlüssig, kraftschlüssig und/oder stoffschlüssig mit der Außenhülse verbunden. So kann der erste Elastomerkörper an das Außenrohr, insbesondere an einem an dem Außenrohr ausgebildeten Kragenabschnitt, anvulkanisiert sein. Ferner kann der erste Elastomerkörper an einem Ring mit oder ohne einer Kragenstruktur anvulkanisiert sein, der mit dem Außenrohr verbunden wird. Bei der Verwendung einer Außenhülse aus Metall kann die Ring mit dem Außenrohr beispielsweise durch Rollieren oder Bördeln verbunden werden, indem der Kragen des Außenrohrs umgebördelt oder umrolliert wird. Bei der Verwendung eines Außenrohrs aus Kunststoff kann der Ring und das Außenrohr mittels Laserstrahlschweißen stoffschlüssig mit dem Außenrohr verbunden werden, sofern auch der Ring aus Kunststoff besteht. Zur Abdichtung des Rings gegen die Außenhülse kann eine separate Gummidichtung zwischen dem Außenrohr und dem Ring angeordnet sein, die Schweißnaht kann aber auch gleichzeitig zum Fixieren und zum Dichten dienen.

In einer vorteilhaften Ausgestaltung ist der erste Elastomerkörper, der zweite Elastomerkörper und/oder der dritte Elastomerkörper formschlüssig, kraftschlüssig und/oder stoffschlüssig mit dem Außenrohr und/oder dem Kern verbunden. Der erste Elastomerkörper, der zweite Elastomerkörper und/oder der dritte Elastomerkörper können jeweils endseitig mit Befestigungselementen zum formschlüssigen, kraftschlüssigen und/oder stoffschlüssigen Befestigen an dem Außenrohr oder dem Kern versehen sein. Diese Befestigungselemente können Dichtungen enthalten, insbesondere für den Fall, dass keine stoffschlüssige Verbindung zum Außenrohr oder Kern vorgesehen ist. Ferner können der erste Elastomerkörper, der zweite Elastomerkörper und/oder der dritte Elastomerkörper an das Außenrohr und/oder den Kern anvulkanisiert sein.

Weiterhin vorteilhaft weisen der zweite Elastomerkörper und/oder der dritte Elastomerkörper eine Innenhülse und/oder eine Außenhülse auf, wobei die Innenhülse auf den Kern aufschiebbar und die Außenhülse in das Außenrohr einsetzbar ist. Dadurch können der zweite Elastomerkörper und/oder der dritte Elastomerkörper als separate Bauteile gefertigt, um bei der Geometrie der Elastomerkörper einen großen gestalterischen Spielraum zu haben und anschließend auf den Kern montiert beziehungsweise in das Außenrohr eingesetzt werden, um den zweiten Elastomerkörper und/oder den dritten Elastomerkörper axial gegen den ersten Elastomerkörper vorzuspannen. Die Innenhülse kann auf den Kern aufgepresst und die Außenhülse kann in das Außenrohr eingepresst sein. Die Innenhülse kann hierzu einen Durchmesser aufweisen, der kleiner ist als der Außendurchmesser des Kerns und die Außenhülse kann einen Außendurchmesser aufweisen, der größer ist als der Innendurchmesser des Außenrohrs. Die Innenhülse und die Außenhülse können stoffschlüssig mit dem zweiten Elastomerkörper und/oder dem dritten Elastomerkörper verbunden sein. Die Innenhülse und die Außenhülse können aus Metall oder Kunststoff gefertigt sein.

In einer vorteilhaften Ausgestaltung ragt der erste Elastomerkörper in Axialrichtung derart von dem Außenrohr ab, dass der erste Elastomerkörper im eingesetzten Zustand im Wesentlichen außerhalb des Aufnahmeauges angeordnet ist. Da der erste Elastomerkörper außerhalb des Aufnahmeauges angeordnet ist, ist es radial nicht auf das Aufnahmeauge, sondern nur durch den zur Verfügung stehenden Bauraum außerhalb des Aufnahmeauges geometrisch limitiert, so dass der erste Elastomerkörper einen großen Außendurchmesser und damit eine große Dehnlänge aufweisen kann. Dadurch kann der erste Elastomerkörper besonders lebensdauerfest ausgeführt werden. Außerdem kann der erste Elastomerkörper, der gleichzeitig als Pumpmembran fungiert, bei einem großen Außendurchmesser eine große wirksame Pumpfläche erzeugen. Zudem kann der erste Elastomerkörper hohe statische Vorlasten aufnehmen. Durch Überdeckung in Axialrichtung von Kern und Außenrohr kann die Axialsteifigkeit gut eingestellt werden. Da der erste Elastomerkörper keine wesentliche Überdeckung zwischen innerer und äußerer Anbindung in Radialrichtung aufweist, ist zum einen der Beitrag des ersten Elastomerkörpers zur radialen Gesamtsteifigkeit des Lagers nur gering, zum anderen entstehen durch die radialen Auslenkungen des Lagers im ersten Elastomerkörper nur geringe zusätzliche Druck- und Zugdehnungen. Somit kann bei hohen Vorlasten ein lebensdauerfester Zustand eingestellt werden und gleichzeitig kann der erste Elastomerkörper hauptsächlich im Druckbereich arbeiten.

Vorteilhaft ist der Kern endseitig mit einer Anschlagplatte verbunden. Der erste Elastomerkörper kann wenigstens einen Anschlag aufweisen, der in Axialrichtung von der Anschlagplatte beabstandet ist und eine Relativbewegung von dem Kern zu dem Außenrohr in Axialrichtung beschränkt. Die Anschläge können materialeinheitlich aus dem ersten Elastomerkörper geformt sein. Die Anschlagplatte kann materialeinheitlich aus dem Kern geformt oder ein separates Teil sein, welches formschlüssig, kraftschlüssig und/oder stoffschlüssig mit dem Kern verbunden ist. Der erste Elastomerkörper kann stoffschlüssig beispielsweise mittels Vulkanisation oder einem Postbondingprozess mit der Anschlagplatte verbunden sein. Es ist aber auch möglich, dass der Elastomerkörper keine stoffschlüssige Verbindung mit der Anschlagplatte aufweist.

In einer vorteilhaften Ausgestaltung weist der dritte Elastomerkörper Anschläge auf, die von dem Kern beabstandet sind. Vorteilhaft wirken die Anschläge in X-Richtung. Da die Anschläge von dem Kern beabstandet sind, weist der dritte Elastomerkörper eine geringe Steifigkeit in X-Richtung auf. Zudem begrenzen die Anschläge eine Relativbewegung von Kern und Außenhülse in X-Richtung und erhöhen so die Lebensdauer des dritten Elastomerkörpers. Vorteilhaft sind die Anschläge an der Außenhülse angebunden. Die Anschläge können materialeinheitlich aus dem dritten Elastomerkörper geformt sein. Vorteilhaft ist der dritte Elastomerkörper als Nierenlager ausgebildet. Weiterhin vorteilhaft sind die Nieren mit einer dünnen stoffeinheitlich mit dem Elastomerkörper gebildeten Elastomermembran verschlossen, um das Eindringen von Fremdkörpern und Schmutz in das Lagerinnere zu verhindern.

In einer vorteilhaften Ausgestaltung weist der dritte Elastomerkörper wenigstens ein Zwischenblech auf. Das Zwischenblech kann in den Elastomerkörper einvulkanisiert sein.

Nachfolgend werden das hydraulisch dämpfende Lager, die Membran sowie weitere Merkmale und Vorteile anhand von Ausführungsbeispielen näher erläutert, die in den Figuren schematisch dargestellt sind. Hierbei zeigen:
- Fig. 1: einen Querschnitt durch ein hydraulisch dämpfendes Lager gemäß einer ersten Ausführungsform;
- Fig. 2: einen Querschnitt entlang der Linie II-II von Fig. 1;
- Fig. 3: eine vergrößerte Darstellung eines Querschnitts durch eine Membran gemäß einer ersten Ausführungsform mit einer Innenhülse und einer Außenhülse;
- Fig. 4: einen vergrößerten Ausschnitt der in Fig. 3 dargestellten Membran;
- Fig. 5: einen Querschnitt durch ein hydraulisch dämpfendes Lager gemäß einer zweiten Ausführungsform;
- Fig. 6: eine vergrößerte Darstellung eines Querschnitts durch eine Membran gemäß einer zweiten Ausführungsform mit einer Innenhülse und einer Außenhülse;
- Fig. 7: eine vergrößerte Darstellung eines Querschnitts durch eine Membran gemäß einer dritten Ausführungsform mit einer Innenhülse und einer Außenhülse;
- Fig. 8: eine vergrößerte Darstellung eines Querschnitts durch eine Membran gemäß einer vierten Ausführungsform mit einer Innenhülse und einer Außenhülse;
- Fig. 9: einen Querschnitt durch ein hydraulisch dämpfendes Lager gemäß einer dritten Ausführungsform; und
- Fig. 10: einen Querschnitt durch ein hydraulisch dämpfendes Lager gemäß einer vierten Ausführungsform.

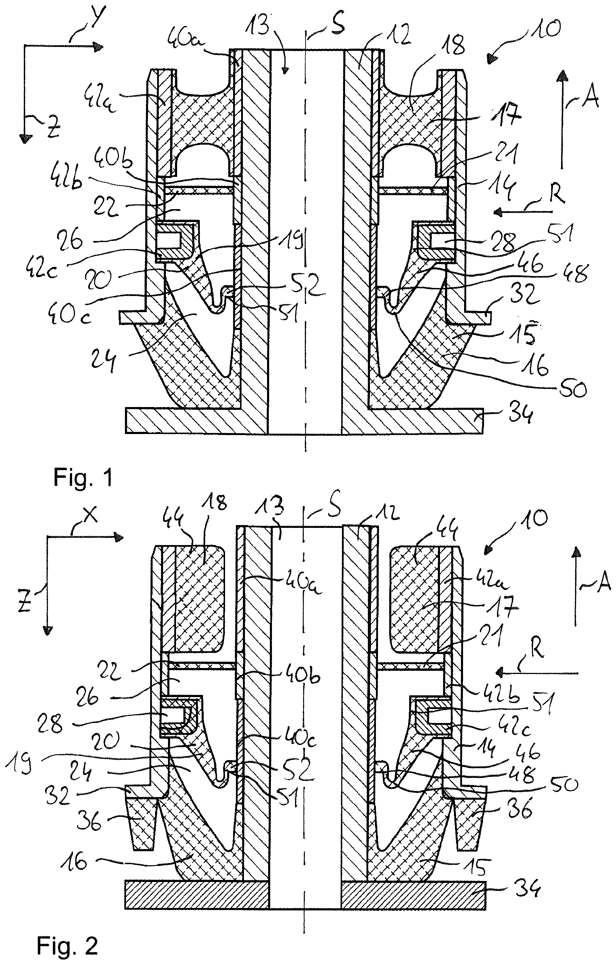

In den Figuren 1 und 2 ist ein hydraulisch dämpfendes Lager 10, insbesondere ein hydraulisch dämpfendes Hilfsrahmenlager, gezeigt, das zur Lagerung eines nicht dargestellten Hilfsrahmens eines Kraftfahrzeugs dient. Hierzu wird das Lager 10 in ein nicht dargestelltes Aufnahmeauge des Hilfsrahmens eingesetzt.

Das Lager 10 weist einen Kern 12 und ein den Kern 12 unter Ausbildung eines Abstandes umgebendes Außenrohr 14 auf. Der Kern 12 weist eine Durchgangsöffnung 13 auf, durch welche ein Befestigungselement zur Befestigung des Lagers 10 an der Fahrzeugkarosserie hindurchführbar ist. Über das Außenrohr 14 wird das Lager 10 in ein Aufnahmeauge eines Hilfsrahmens eingesetzt, insbesondere eingepresst. Der Kern 12 und das Außenrohr 14 können aus Metall oder Kunststoff hergestellt sein.

Zwischen dem Kern 12 und dem Außenrohr 14 sind ein erster Elastomerkörper 15, ein zweiter Elastomerkörper 21, eine Membran 19 und ein dritter Elastomerkörper 17 angeordnet. Der erste Elastomerkörper 15 ist als ein Axiallager 16, der dritte Elastomerkörper 17 ist als ein Radiallager 18, die Membran 19 ist als eine Zwischenmembran 20 und der zweite Elastomerkörper 21 ist als eine Ausgleichsmembran 22 ausgebildet.

Wie in den Figuren 1 und 2 ersichtlich ist, begrenzen das Axiallager 16 und die Zwischenmembran 20 eine erste Fluidkammer 24, und die Zwischenmembran 20 und die Ausgleichsmembran 22 begrenzen eine zweite Fluidkammer 26. Beide Fluidkammern 24, 26 sind mit einem Fluid gefüllt und über einen Dämpfungskanal 28 fluidleitend miteinander verbunden.

Wie in den Figuren 1 und 2 ersichtlich ist, weist das Axiallager 16 einen ersten Elastomerkörper 15 auf, der näherungsweise hohlkegelförmig ausgebildet ist und stoffschlüssig an den Kern 12 und das Außenrohr 14 angebunden, insbesondere anvulkanisiert ist. Der erste Elastomerkörper 15 ist dabei derart an das Außenrohr 14 angebunden, dass dieser in Axialrichtung A von dem Außenrohr 14 abragt. Dadurch ist der erste Elastomerkörper 15 im eingesetzten Zustand im Wesentlichen außerhalb eines Aufnahmeauges angeordnet.

Zur Anbindung des ersten Elastomerkörpers 15 an das Außenrohr 14, weist das Außenrohr 14 einen Kragenabschnitt 32 auf, an dem der erste Elastomerkörper 15 anvulkanisiert ist. Zudem ist der erste Elastomerkörper 15 eine Innenfläche des Außenrohrs 14 anvulkanisiert.

Wie zudem in den Figuren 1 und 2 ersichtlich ist, weist der Kern 12 endseitig eine von dem Kern 12 senkrecht abragende Anschlagplatte 34 auf. Die Anschlagplatte 34 kann materialeinheitlich aus dem Kern 12 gebildet sein, wie in Fig. 1 dargestellt ist, oder ein separates Teil sein, das formschlüssig, kraftschlüssig und/oder stoffschlüssig mit dem Kern 12 verbunden sein kann, wie in Fig. 2 dargestellt ist. Der erste Elastomerkörper 15 ist an eine Außenseite des Kerns 12 anvulkanisiert. Ferner kann der erste Elastomerkörper 15 mit der Anschlagplatte 34 stoffschlüssig mittels Vulkanisation oder einem Postbondingprozess verbunden sein. Zudem kann der erste Elastomerkörper 15 ungehaftet ganz oder teilweise an der Anschlagplatte 34 anliegen oder diese in KO-Lage nicht berühren. Wie zudem in Fig. 2 ersichtlich ist, weist der erste Elastomerkörper 15 erste Anschläge 36 auf, die von der Anschlagplatte beabstandet sind, um eine Relativbewegung von Kern 12 und Außenrohr 14 zu begrenzen.

Der als Radiallager 18 ausgebildete zweite Elastomerkörper 21 weist eine Innenhülse 40a und eine Außenhülse 42a auf. Der zweite Elastomerkörper 21 erstreckt sich in Radialrichtung R und ist stoffschlüssig mit der Innenhülse 40a und der Außenhülse 42a verbunden, insbesondere anvulkanisiert. Über die Hülsen 40a, 42a erfolgt die Befestigung des Radiallagers 18 an dem Kern 12 und dem Außenrohr 14, indem die Innenhülse 40a auf den Kern 12 aufgeschoben, insbesondere aufgepresst wird, und die Außenhülse 42a in die Öffnung des Außenrohrs 14 eingesetzt, insbesondere eingepresst wird. Dazu kann die Innenhülse 40a einen Durchmesser aufweisen, der kleiner ist als der Außendurchmesser des Kerns 12 und die Außenhülse 42a kann einen Außendurchmesser aufweisen, der größer ist als der Innendurchmesser des Außenrohrs 14. Wie zudem in Fig. 2 ersichtlich ist, weist das Radiallager 18 zweite Anschläge 44 auf, die von dem Kern 12 beziehungsweise der Innenhülse 40a beabstandet sind. Die zweiten Anschläge 44 sind materialeinheitlich aus dem zweiten Elastomerkörper 21 gebildet.

An das Radiallager 18 schließt sich die Ausgleichsmembran 22 an, die zur Befestigung auf dem Kern 12 beziehungsweise in dem Außenrohr 14 eine Innenhülse 40b und eine Außenhülse 42b aufweist. Damit die zweite Fluidkammer 26 flüssigkeitsdicht ausgeführt wird, sind nicht dargestellte Dichtelemente beispielsweise an der Innenhülse 40b und Außenhülse 42b vorzusehen. Die Innenhülse 40b wird auf den Kern 12 aufgeschoben, insbesondere aufgepresst, und die Außenhülse 42b wird in die Öffnung des Außenrohrs 14 eingesetzt, insbesondere eingepresst. Dazu kann die Innenhülse 40b einen Durchmesser aufweisen, der kleiner ist als der Außendurchmesser des Kerns 12 und die Außenhülse 42b kann einen Außendurchmesser aufweisen, der größer ist als der Innendurchmesser des Außenrohrs 14. Die Ausgleichsmembran 22 ist aus einem elastomeren Werkstoff.

Zwischen der Ausgleichsmembran 22 und dem Axiallager 16 ist die Zwischenmembran 20 angeordnet, die zur Befestigung auf dem Kern 12 beziehungsweise in dem Außenrohr 14 eine Innenhülse 40c und einen Außenhülse 42c aufweist. Die Innenhülse 40b wird auf den Kern 12 aufgeschoben, insbesondere aufgepresst, und die Außenhülse 42b wird in die Öffnung des Außenrohrs 14 eingesetzt, insbesondere eingepresst. Dazu kann die Innenhülse 40b einen Durchmesser aufweisen, der kleiner ist als der Außendurchmesser des Kerns 12 und die Außenhülse 42b kann einen Außendurchmesser aufweisen, der größer ist als der Innendurchmesser des Außenrohrs 14. In die Außenhülse 42c ist der Dämpfungskanal 28 eingebracht. Die Zwischenmembran 20 ist aus einem elastomeren Werkstoff.

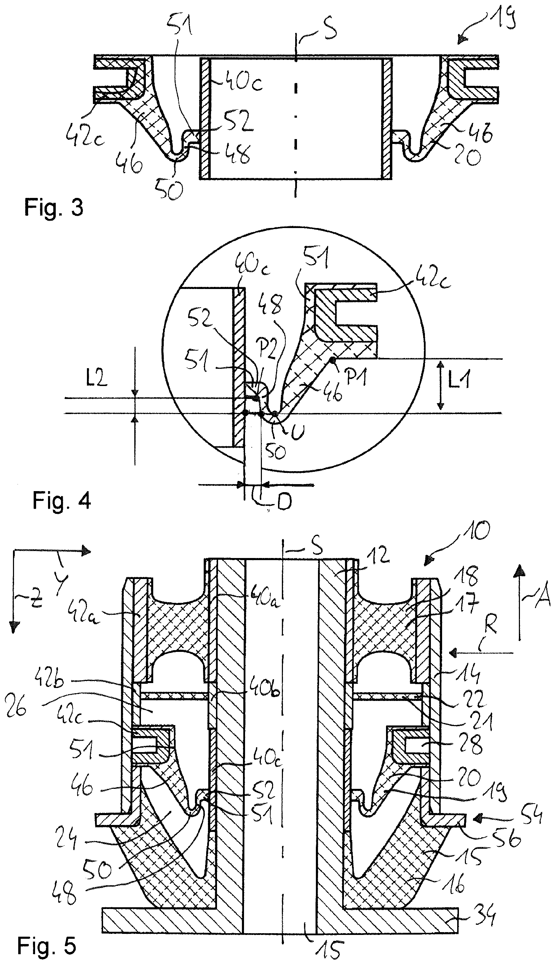

Wie insbesondere in Fig. 3 ersichtlich ist, ist die Zwischenmembran 20 weitestgehend rotationssymmetrisch um eine Symmetrieachse S, wobei die Zwischenmembran 20 einen ersten Schenkel 46, einen zweiten Schenkel 48 und eine die beiden Schenkel miteinander verbindende Basis 50 aufweist. Die Basis 50 ist näherungsweise U-förmig ausgebildet. Der erste Schenkel 46 ist radial außenliegend angeordnet, wobei eine mittlere Dicke des ersten Schenkels 46 mindestens doppelt so dick wie die mittlere Dicke des zweiten Schenkels 48 ist. Wie zudem ersichtlich ist, erweitert sich der erste Schenkel 46 ausgehend von der Basis 50 stetig, insbesondere nimmt der erste Schenkel 46 trichterförmig zu.

Der erste Schenkel 46 weist endseitig einen Verbindungsabschnitt 51 auf, der stoffschlüssig mit der Außenhülse 42c verbunden, insbesondere anvulkanisiert ist. Wie in Fig. 3 ersichtlich ist, umschließt der Verbindungsabschnitt 51 die Außenhülse 42c. Der zweite Schenkel 48 weist endseitig einen Verbindungsabschnitt 51 in Form einer Verdickung 52 auf, die an eine Außenseite der Innenhülse 42c stoffschlüssig angebunden, insbesondere anvulkanisiert ist.

Da der erste Schenkel 46 der Zwischenmembran 20 mindestens doppelt so dick wie der zweite Schenkel 48 ist, kann die Zwischenmembran große Bewegungen in Axialrichtung A und/oder in Radialrichtungen R durchführen und ist gleichzeitig sehr blähsteif bei Differenzdrücken zwischen den Fluidkammern 24, 26; insbesondere kann sich die Basis 50 bei großen Bewegungen in Axialrichtung A und einem gleichzeitig auftretenden hohen Differenzdruck mit hohem Druck in der ersten Fluidkammer 24 und niedrigem Druck in der zweiten Fluidkammer 26 an die Außenhülse 40b anlegen. Dadurch weist die Zwischenmembran 20 eine große Blähsteifigkeit auf, was in einer verbesserten Dämpfung resultiert.

In Fig. 4 sind die Längen der Schenkel 46, 48 sowie ein Abstand A der Basis 50 von der Innenhülse 42c dargestellt. Der erste Schenkel 46 weist eine erste Länge L1 und der zweite Schenkel 48 weist eine zweite Länge L2 auf, wobei die erste Länge L1 größer als die zweite Länge L2 ist. Insbesondere ist die erste Länge L1 dreimal so groß wie die zweite Länge L2. Dies ist notwendig, da der längere Schenkel für die hohe Beweglichkeit in translatorische Richtungen verantwortlich ist. Gleichzeitig führt eine größere Länge aber zu einer geringen Blähsteifigkeit und damit geringer Pumpleistung. Dieses wird durch die größere Dicke des längeren Schenkels kompensiert. So wird eine Membrangeometrie realisiert, die sich durch eine hohe Lebensdauer auszeichnet, gleichzeitig aber auch eine gute Pumpwirkung in axialer Richtung erlaubt.

Wie in Fig. 4 ersichtlich ist, weisen die obere Fläche und die untere Fläche der Membran 19 jeweils einen möglichst gleichmäßigen Verlauf ohne größere Dickensprünge auf. Die Länge eines jeden Schenkels 46, 48 ist durch den Abstand in Z-Richtung zwischen dem unteren Umkehrpunkt U der Basis 50 und dem höchsten Anbindungspunkt P1, P2 des jeweiligen Schenkels 46, 48 definiert.

Im Falle von stetigen, die Geometrien beschreibenden Funktionen ist die mathematische Ableitung der die obere Fläche beschreibenden Funktion im Umkehrpunkt U der Basis 50 gleich Null. Dasselbe gilt für die Ableitung der die untere Geometrie der Schenkel 46, 48 beschreibenden Funktionen, deren mathematische Ableitung an ihrem höchsten Punkt P1, P2 entweder auch zu Null wird, alternativ in einen steifen Anbindungsbereich beziehungsweise Verbindungsbereichs 51 ausläuft oder eine Unstetigkeit aufweisen kann. Sinngemäß ist der obere Anbindungspunkt des radial außenliegenden Schenkels so definiert, dass jenseits von diesem Punkt keine nennenswerten Dehnungen im Elastomer des Anbindungsbereichs durch die Bewegungen der Membran 19 mehr auftreten.

Wie zudem in Fig. 4 ersichtlich ist, sind die einander zugewandten Oberflächen der Innenhülse 40c und des zweiten Schenkels 48 zueinander beabstandet, wobei ein Abstand D zwischen ca. 1 mm und ca. 10 mm beträgt. Vorteilhaft beträgt der Abstand A zwischen ca. 2 mm und ca. 3 mm. Dadurch werden bei großen Amplituden eine hohe Pumpleistung und damit eine hohe Dämpfung erzielt. Indem der Abstand möglichst klein ausgeführt wird, kann sich die Basis 50 der Membran 19 bei großen Amplituden an einem Kern oder einem Innenrohr anlegen und dadurch blähsteifer werden, was zu einer hohen Dämpfung führt.

Bei dem hydraulisch dämpfenden Lager 10 nimmt primär das Axiallager 16 die auf das Lager 10 wirkenden axialen Vorlasten in Z-Richtung auf. Die Z-Lasten während des Fahrbetriebes werden ebenfalls zum größten Teil vom Axiallager 16 aufgenommen, während das Radiallager 18 den größten Teil der im Betrieb auftretenden radialen Lasten in Y-Richtung aufnimmt und gleichzeitig bedingt durch den Abstand der zweiten Anschläge 44 zu dem Kern 12 eine geringe axiale Steifigkeit beziehungsweise geringe radiale Steifigkeit in X-Richtung aufweist. Ferner ragt das Axiallager 16 in Axialrichtung A derart von dem Außenrohr 14 ab, dass das Axiallager 14 im eingesetzten Zustand im Wesentlichen außerhalb des Aufnahmeauges angeordnet ist. Da das Axiallager 16 außerhalb des Aufnahmeauges angeordnet ist, ist es radial nicht auf das Aufnahmeauge, sondern nur durch den zur Verfügung stehenden Bauraum außerhalb des Aufnahmeauges geometrisch limitiert, so dass das Axiallager 16 einen großen Außendurchmesser und damit eine große Dehnlänge aufweist. Durch die zuvor beschriebenen unterschiedlichen Steifigkeitsbeiträge in Y und Z-Richtung von Axiallager 16 und Radiallager 18 sowie der Anordnung des Axiallagers 16 außerhalb des Aufnahmeauges kann das axial dämpfende Lager 10 hohe statische Lasten beziehungsweise axiale Vorlasten aufnehmen und lebensdauerfest ausgeführt werden. Darüber hinaus können die Grundsteifigkeiten und die dynamischen Eigenschaften des Lagers 10 einfach abgestimmt werden.

Da das Axiallager 16 hohe axiale Vorlasten in Z-Richtung aufnehmen kann, können die Ausgleichsmembran 22 und die Zwischenmembran 20 während der Montage vorgespannt eingebaut werden, so dass sie in der KO-Lage, wie diese in den Figuren 1, 2 und 4 gezeigt ist, aufgrund der auf das Axiallager 16 wirkenden statischen Last beziehungsweise axialen Vorlast in Z-Richtung eine reduzierte bis gar keine axiale Auslenkung aufweisen.

In der in Figuren 1 bis 4 dargestellten Ausführungsform ist die Länge des ersten Schenkels 46 mindestens doppelt so lang wie die des zweiten Schenkels 48. Dadurch kann die Membran 19 große Bewegungen in Axialrichtung A und/oder in Radialrichtungen R durchführen. Außerdem ist die mittlere Dicke des ersten Schenkels 46 mindestens doppelt so groß wie die des zweiten Schenkels 48. Hierdurch ist die Membran 19 unempfindlich gegenüber einem Aufblähen aufgrund hoher Differenzdrücke zwischen den beiden mit Fluid gefüllten Fluidkammern 22, 24. Dieses führt in den meisten Betriebszuständen zu einer hohen Blähsteifigkeit der Membran 19, was in einem großen Pumpvolumen und somit in einem verbesserten Dämpfungseffekt resultiert. Zudem gewährleistet diese Ausgestaltung, dass die Membran 19 bei Differenzdrücken zwischen den Fluidkammern 22, 24 sehr steif ist.

Nachfolgend werden weitere Ausführungsformen des hydraulisch dämpfenden Lagers 10 sowie der Membran 19 beschrieben, wobei für deren Beschreibung die zuvor bereits verwendeten Bezugszeichen für gleiche oder funktionsgleiche Teile verwendet werden.

In Fig. 5 ist eine zweite Ausführungsform des Hydrolagers 10 gezeigt, die sich von der ersten Ausführungsform in der Befestigung des ersten Elastomerkörpers 15 an dem Außenrohr 14 unterscheidet. Der erste Elastomerkörper 15 ist an einen Ring 54 mit einem Kragen 56 anvulkanisiert, mittels dem der erste Elastomerkörper 15 mit dem Außenrohr 14 verbunden ist. Hierzu wird der Ring 54 in das Außenrohr 14 eingesetzt, wobei der Ring formschlüssig, kraftschlüssig und/oder stoffschlüssig mit dem Außenrohr 14 verbunden werden kann. Wenn der Ring 54 genauso wie das Außenrohr 15 aus einem Kunststoff hergestellt ist, wird dieser beispielsweise mittels Laserdurchstrahlschweißen stoffschlüssig mit dem Außenrohr 14 und gleichzeitig dichtend verbunden. Wenn der Ring 54 und/oder das Außenrohr 15 aus einem Metall hergestellt ist, werden beide formschlüssig, und/oder kraftschlüssig miteinander verbunden, indem beispielsweise der Kragen 56 umgebördelt oder umrolliert wird. Zwischen dem Ring 54 und dem Außenrohr 14 kann eine nicht dargestellte Gummidichtung eingebracht sein, die die zweite Fluidkammer 26 abdichtet.

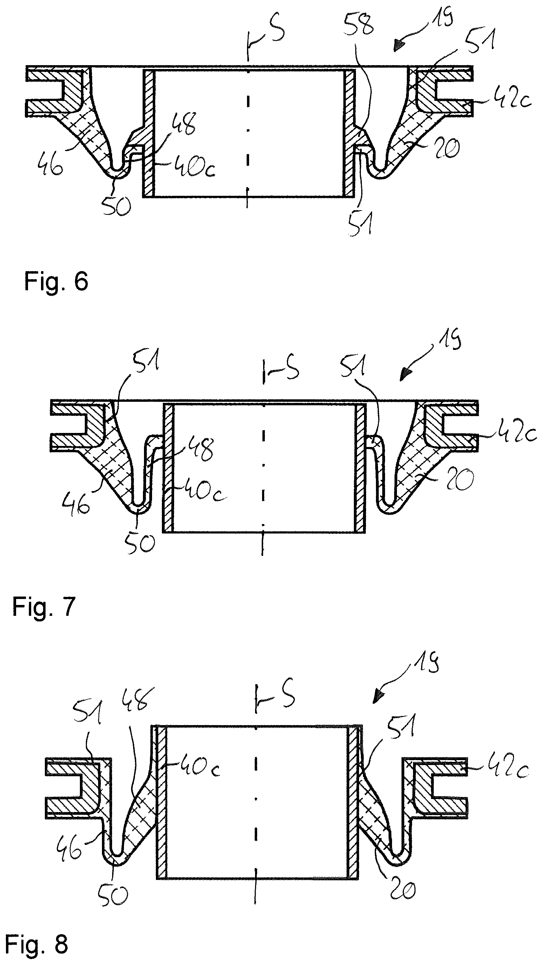

In Fig.6 ist eine zweite Ausführungsform der als Zwischenmembran 20 ausgebildeten Membran 19 gezeigt, die sich von der ersten Ausführungsform dadurch unterscheidet, dass der erste Schenkel 46 an einem von der Innenhülse 40b abragenden Vorsprung 58 anvulkanisiert ist.

In Fig. 7 ist eine dritte Ausführungsform der als Zwischenmembran 20 ausgebildeten Membran 19 dargestellt, die sich von der ersten Ausführungsform dadurch unterscheidet, dass der zweite Schenkel 48 länger ausgebildet ist. Insbesondere entspricht die Länge L2 des zweiten Schenkels 48 der Länge L1 des ersten Schenkels 46. Dadurch werden die während der Bewegungen in Axialrichtung A und/oder in Radialrichtung auftretenden Dehnungen in der Zwischenmembran 20 reduziert, so dass die Zwischenmembran 20 eine hohe Lebensdauer aufweist und zudem dynamisch weich ausgebildet ist.

In Fig. 8 ist eine vierte Ausführungsform der Membran 19 dargestellt, die sich von den anderen Ausführungsformen dadurch unterscheidet, dass der radial innenliegende zweite Schenkel 48 mindestens doppelt so dick ist wie der radial außenliegende erste Schenkel 48 ist.

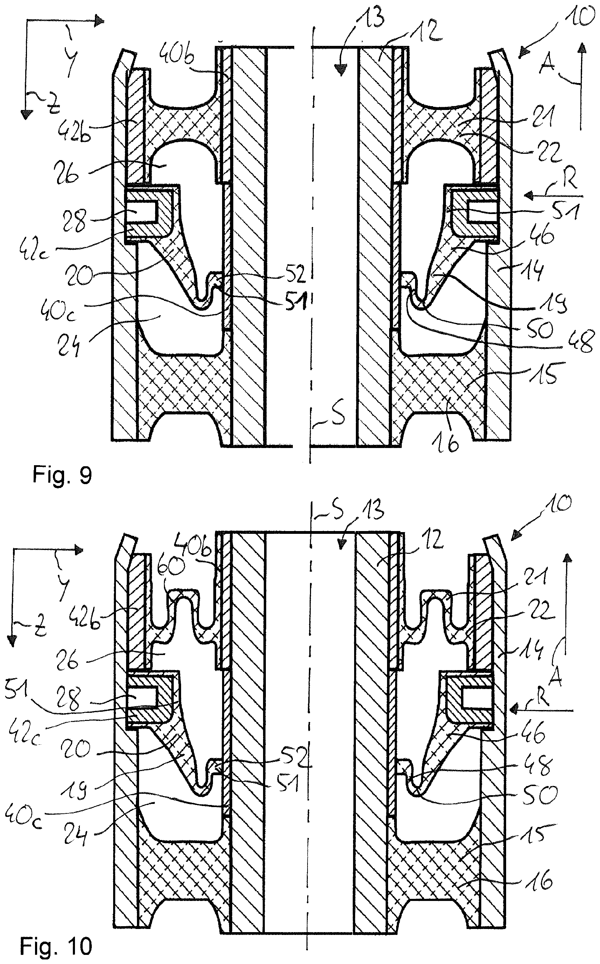

In Fig. 9 ist eine dritte Ausführungsform des hydraulisch dämpfenden Lagers 10 gezeigt, die sich von den ersten beiden Ausführungsformen dadurch unterscheidet, dass kein Radiallager 18 vorhanden ist und der zweite Elastomerkörper 21 im Vergleich zu den vorhergehenden Ausführungsbeispielen dicker ist.

In Fig. 10 ist eine vierte Ausführungsform des hydraulisch dämpfenden Lagers 10 gezeigt, die sich von der dritten Ausführungsform dadurch unterscheidet, dass der zweite Elastomerkörper 21 dünnwandig ausgebildete ist und die Form eines Faltenbalges 60 aufweist. Da der zweite Elastomerkörper 21 die Form eines dünnwandigen Faltenbalgs 60 aufweist, ist die zweite Fluidkammer 26 eine Niederdruck-Ausgleichskammer.

Die Membran 19 zeichnet sich dadurch aus, dass die mittlere Dicke eines Schenkels mindestens doppelt so groß wie des anderen Schenkels ist. Infolgedessen kann die Membran 19 große Bewegungen in Axialrichtung A und/oder in Radialrichtungen R durchführen und ist unempfindlich gegenüber einem Aufblähen aufgrund hoher Differenzdrücke zwischen den beiden mit Fluid gefüllten Fluidkammern 24, 26. Dies führt in den meisten Betriebszuständen zu einer hohen Blähsteifigkeit der Membran 19, was in einem großen Pumpvolumen und somit in einem verbesserten Dämpfungseffekt resultiert. Zudem gewährleistet diese Ausgestaltung, dass die Membran 19 bei Differenzdrücken zwischen den Fluidkammern 24, 26 sehr steif ist.

### Bezugszeichenliste

- 10: hydraulisch dämpfendes Lager
- 12: Kern
- 13: Durchgangsöffnung
- 14: Außenrohr
- 15: erster Elastomerkörper
- 16: Axiallager
- 17: dritter Elastomerkörper
- 18: Radiallager
- 19: Membran
- 20: Zwischenmembran
- 21: zweiter Elastomerkörper
- 22: Ausgleichsmembran
- 24: erste Fluidkammer
- 26: zweite Fluidkammer
- 28: Dämpfungskanal
- 32: Kragenabschnitt
- 34: Anschlagplatte
- 36: erster Anschlag
- 40a: Innenhülse
- 40b: Innenhülse
- 40c: Innenhülse
- 42a: Außenhülse
- 42b: Außenhülse
- 42c: Außenhülse
- 44: zweiter Anschlag
- 46: erster Schenkel
- 48: zweiter Schenkel
- 50: Basis
- 51: Verbindungsabschnitt
- 52: Verdickung
- 54: Ring
- 56: Kragen
- 58: Vorsprung
- 60: Faltenbalg

- S: Symmetrieachse
- A: Axialrichtung
- R: Radialrichtung
- X: X-Richtung
- Y: Y-Richtung
- Z: Z-Richtung

- L1: erste Länge
- L2: zweite Länge
- U: Umkehrpunkt der Basis
- P1: Anbindungspunkt des ersten Schenkels
- P2: Anbindungspunkt des zweiten Schenkels
- D: Abstand

## Patentansprüche

1. Membran (19) für ein hydraulisch dämpfendes Lager (10), die einen ersten Schenkel (46), einen zweiten Schenkel (48) und eine die beiden Schenkel (46, 48) miteinander verbindende Basis (50) aufweist, **dadurch gekennzeichnet, dass** die Basis (50) U-förmig mit einer einheitlichen Dicke ausgebildet ist und die Schenkel (46, 48) von der U-förmigen Basis (50) abragen, wobei eine mittlere Dicke eines der Schenkel (46, 48) mindestens doppelt so dick wie die des anderen Schenkels (46, 48) ist, wobei sich der Querschnitt des im Mittel mindestens doppelt so dicken Schenkels (46, 48) ausgehend von der Basis (50) stetig erweitert, wobei der im Mittel mindestens doppelt so dicke Schenkel (46, 48) eine erste Länge (L1 ) und der andere Schenkel (46, 48) eine zweite Länge (L2) aufweist, wobei die erste Länge (L1 ) mindestens doppelt so groß wie die zweite Länge (L2) ist wobei der im Mittel mindestens doppelt so dicke Schenkel (46, 48) den radial außenliegenden Schenkel bildet.

2. Membran nach einem der vorhergehenden Ansprüche, **dadurch gekennzeichnet, dass** die Schenkel (46, 48) an ihren Extremitäten einen Verbindungsabschnitt (51 ) aufweisen, die formschlüssig, kraftschlüssig und/oder stoffschlüssig mit einem Kern (12) und/oder einem Außenrohr (14) eines hydraulisch dämpfenden Lages (10) verbindbar sind.

3. Membran nach einem der vorhergehenden Ansprüche, **dadurch gekennzeichnet, dass** die einander zugewandten Oberflächen von Verbindungsabschnitt (51 ) und/oder einer Innenhülse (40c) und radial innenliegendem Schenkel (48) zueinander beabstandet sind, wobei ein Abstand (D) zwischen ca. 1 mm und ca. 10 mm beträgt.

4. Membran nach Anspruch 2 oder 3, **dadurch gekennzeichnet, dass** die Verbindungsabschnitte (51 ) mit einer Innenhülse (40c) und/oder einer Außen hülse (42c) verbunden sind, wobei die Innenhülse (40c) auf den Kern (12) aufschiebbar und die Außenhülse (42c) in das Außenrohr (14) einsetzbar ist, wobei vorzugsweise in die Außenhülse (42c) der Membran (19) ein Dämpfungskanal (28) eingebracht ist.

5. Hydraulisch dämpfendes Lager (10) aufweisend einen Kern (12) und ein den Kern (12) umgebendes Außenrohr (14), wobei zwischen dem Kern (12) und dem Außenrohr (14) ein erster Elastomerkörper (15), eine Membran (19) nach einem der Ansprüche 1 bis 4 und ein zweiter Elastomerkörper (21 ) angeordnet sind, wobei der erste Elastomerkörper (15) und die Membran (19) eine erste Fluidkammer (24) und die Membran (19) und der zweite Elastomerkörper (21 ) eine zweite Fluidkammer (26) begrenzen, und wobei die Fluidkammern (24, 26) mit einem Fluid gefüllt und über einen Dämpfungskanal (28) fluidleitend miteinander verbunden sind.

6. Hydraulisch dämpfendes Lager nach Anspruch 5, **dadurch gekennzeichnet, dass** zwischen dem Kern (12) und dem Außenrohr (14) ein dritter Elastomerkörper (17) angeordnet ist, wobei vorzugsweise der erste Elastomerkörper (15), der zweite Elastomerkörper (21) und/oder der dritte Elastomerkörper (17) formschlüssig, kraftschlüssig und/oder stoffschlüssig mit dem Kern (12) und/oder der Außenhülse (42a, 42b, 42c) verbunden ist; wobei vorzugsweise der zweite Elastomerkörper (21) und/oder der dritte Elastomerkörper (17) eine Innenhülse (40a, 40b) und/oder eine Außenhülse (42a, 42b) aufweisen, wobei die Innenhülse (40a, 40b) auf den Kern (12) aufschiebbar und die Außenhülse (42a, 42b) in das Außenrohr (14) einsetzbar ist.

7. Hydraulisch dämpfendes Lager nach Anspruch 5 oder 6, **dadurch gekennzeichnet, dass** der erste Elastomerkörper (15) ein Axiallager (16) ist.

8. Hydraulisch dämpfendes Lager nach Anspruch 6 oder 7 , **dadurch gekennzeichnet, dass** der dritte Elastomerkörper (17) ein Radiallager (18) ist.

9. Hydraulisch dämpfendes Lager nach einem der Ansprüche 5 bis 8, **dadurch gekennzeichnet, dass** der zweite Elastomerkörper (21 ) eine Ausgleichsmembran (22) ist.

10. Hydraulisch dämpfendes Lager (10) nach einem der Ansprüche 8 oder 9, **dadurch gekennzeichnet, dass** das Radiallager (18) eine Steifigkeit in Y- Richtung aufweist, die mindestens um den Faktor 10 größer ist als seine Steifigkeit in Z-Richtung.

11. Hydraulisch dämpfendes Lager (10) nach einem der Ansprüche 8 bis 10, **dadurch gekennzeichnet, dass** das Axiallager (16) eine Steifigkeit in Z- Richtung aufweist, die mindestens um den Faktor 2 größer ist als die Steifigkeit des Radiallagers (18) in Z-Richtung.

12. Hydraulisch dämpfendes Lager (10) nach einem der Ansprüche 5 bis 11, **dadurch gekennzeichnet, dass** der erste Elastomerkörper (15), der zweite Elastomerkörper (21) und/oder der dritte Elastomerkörper (17) formschlüssig, kraftschlüssig und/oder stoffschlüssig mit dem Kern (12) und/oder der Außenhülse (42a, 42b, 42c) verbunden ist.

## Claims

1. Diaphragm (19) for a hydraulically damping bearing (10), which has a first leg (46), a second leg (48) and a base (50) connecting the two legs (46, 48) to one another, **characterized in that** the base (50) is U-shaped with a uniform thickness and the legs (46, 48) project from the U-shaped base (50), an average thickness of one of the legs (46, 48) being at least twice as thick as that of the other leg (46, 48), wherein the cross-section of the leg (46, 48), which is on average at least twice as thick, widens continuously starting from the base (50), wherein the leg (46, 48), which is on average at least twice as thick, has a first length (L1 ) and the other leg (46, 48) has a second length (L2), wherein the first length (L1 ) is at least twice as great as the second length (L2), wherein the leg (46, 48), which is on average at least twice as thick, forms the radially outer leg.

2. Diaphragm according to one of the preceding claims, **characterized in that** the legs (46, 48) have a connecting section (51) at their extremities, which can be connected in a form-fitting, force-fitting and/or material-fitting manner to a core (12) and/or an outer tube (14) of a hydraulically damping layer (10).

3. Diaphragm according to one of the preceding claims, **characterized in that** the mutually facing surfaces of connecting portion (51) and/or an inner sleeve (40c) and radially inner limb (48) are spaced apart from one another, a distance (D) being between approximately 1 mm and approximately 10 mm.

4. Diaphragm according to claim 2 or 3, **characterized in that** the connecting sections (51) are connected to an inner sleeve (40c) and/or an outer sleeve (42c), wherein the inner sleeve (40c) can be pushed onto the core (12) and the outer sleeve (42c) can be inserted into the outer tube (14), wherein a damping channel (28) is preferably introduced into the outer sleeve (42c) of the diaphragm (19).

5. Hydraulically damping bearing (10) comprising a core (12) and an outer tube (14) surrounding the core (12), wherein a first elastomer body (15), a diaphragm (19) according to one of claims 1 to 4 and a second elastomer body (21) are arranged between the core (12) and the outer tube (14), wherein the first elastomer body (15) and the diaphragm (19) delimit a first fluid chamber (24) and the diaphragm (19) and the second elastomer body (21) delimit a second fluid chamber (26), and wherein the fluid chambers (24, 26) are filled with a fluid and are connected to one another in a fluid-conducting manner via a damping channel (28).

6. Hydraulically damping bearing according to claim 5, **characterized in that** a third elastomer body (17) is arranged between the core (12) and the outer tube (14), wherein the first elastomer body (15), the second elastomer body (21) and/or the third elastomer body (17) preferably are connected to the core (12) and/or the outer sleeve (42a, 42b, 42c) in a form-fitting, force-fitting and/or material-fitting manner; wherein preferably the second elastomer body (21) and/or the third elastomer body (17) have an inner sleeve (40a, 40b) and/or an outer sleeve (42a, 42b), wherein the inner sleeve (40a, 40b) can be pushed onto the core (12) and the outer sleeve (42a, 42b) can be inserted into the outer tube (14).

7. Hydraulically damping bearing according to claim 5 or 6, **characterized in that** the first elastomer body (15) is an axial bearing (16).

8. Hydraulically damping bearing according to claim 6 or 7, **characterized in that** the third elastomer body (17) is a radial bearing (18).

9. Hydraulically damping bearing according to one of claims 5 to 8, **characterized in that** the second elastomer body (21) is a compensating diaphragm (22).

10. Hydraulically damping bearing (10) according to one of claims 8 or 9, **characterized in that** the radial bearing (18) has a stiffness in the Y direction which is at least a factor of 10 greater than its stiffness in the Z direction.

11. Hydraulically damping bearing (10) according to one of claims 8 to 10, **characterized in that** the axial bearing (16) has a stiffness in the Z direction which is at least a factor of 2 greater than the stiffness of the radial bearing (18) in the Z direction.

12. Hydraulically damping bearing (10) according to one of claims 5 to 11, **characterized in that** the first elastomer body (15), the second elastomer body (21) and/or the third elastomer body (17) is connected to the core (12) and/or the outer sleeve (42a, 42b, 42c) in a form-fit, force-fit and/or material-fit manner.

## Revendications

1. Membrane (19) pour un palier à amortissement hydraulique (10), qui présente une première branche (46), une deuxième branche (48) et une base (50) reliant les deux branches (46, 48) entre elles, **caractérisée en ce que** la base (50) est réalisée en forme de U avec une épaisseur uniforme et les branches (46, 48) font saillie de la base en forme de U (50), une épaisseur moyenne de l'une des branches (46, 48) étant au moins deux fois plus épaisse que celle de l'autre branche (46, 48), la section transversale de la branche (46, 48) en moyenne au moins deux fois plus épaisse s'élargit en continu à partir de la base (50), la branche (46, 48) en moyenne au moins deux fois plus épaisse présentant une première longueur (L1) et l'autre branche (46, 48) une deuxième longueur (L2), la première longueur (L1) étant au moins deux fois plus grande que la deuxième longueur (L2), la branche (46, 48) en moyenne au moins deux fois plus épaisse formant la branche située radialement à l'extérieur.

2. Membrane selon l'une des revendications précédentes, **caractérisée en ce que** les branches (46, 48) présentent à leurs extrémités une section de liaison (51) qui peut être reliée par une liaison par la forme, par une liaison par la force et/ou par une liaison par le matièrau à un noyau (12) et/ou à un tube extérieur (14) d'une couche d'amortissement hydraulique (10).

3. Membrane selon l'une des revendications précédentes, **caractérisée en ce que** les surfaces tournées l'une vers l'autre de la section de liaison (51) et/ou d'un manchon intérieur (40c) et de la branche radialement intérieure (48) sont espacées l'une de l'autre, une distance (D) étant comprise entre environ 1 mm et environ 10 mm.

4. Membrane selon la revendication 2 ou 3, **caractérisée en ce que** les sections de liaison (51) sont reliées à une douille intérieure (40c) et/ou à une douille extérieure (42c), la douille intérieure (40c) pouvant être enfilée sur le noyau (12) et la douille extérieure (42c) pouvant être insérée dans le tube extérieur (14), un canal d'amortissement (28) étant de préférence ménagé dans la douille extérieure (42c) de la membrane (19).

5. Support à amortissement hydraulique (10) présentant un noyau (12) et un tube extérieur (14) entourant le noyau (12), un premier corps élastomère (15), une membrane (19) selon l'une des revendications 1 à 4 et un deuxième corps élastomère (21) étant disposés entre le noyau (12) et le tube extérieur (14), le premier corps élastomère (15) et la membrane (19) délimitant une première chambre à fluide (24) et la membrane (19) et le deuxième corps élastomère (21) délimitant une deuxième chambre à fluide (26), et les chambres à fluide (24, 26) étant remplies d'un fluide et reliées entre elles par un canal d'amortissement (28) de manière à conduire le fluide.

6. Support à amortissement hydraulique selon la revendication 5, **caractérisé en ce qu'**un troisième corps élastomère (17) est disposé entre le noyau (12) et le tube extérieur (14), dans lequel, de préférence, le premier corps élastomère (15), le deuxième corps élastomère (21) et/ou le troisième corps élastomère (17) est relié au noyau (12) et/ou à la douille extérieure (42a, 42b, 42c) par une liaison par la forme, par une liaison par la force et/ou par une liaison par le matériau ; le deuxième corps élastomère (21) et/ou le troisième corps élastomère (17) présentant de préférence une douille intérieure (40a, 40b) et/ou une douille extérieure (42a, 42b), la douille intérieure (40a, 40b) pouvant être enfilée sur le noyau (12) et la douille extérieure (42a, 42b) pouvant être insérée dans le tube extérieur (14).

7. Support à amortissement hydraulique selon la revendication 5 ou 6, **caractérisé en ce que** le premier corps élastomère (15) est un palier axial (16).

8. Support à amortissement hydraulique selon la revendication 6 ou 7, **caractérisé en ce que** le troisième corps élastomère (17) est un support radial (18).

9. Support à amortissement hydraulique selon l'une des revendications 5 à 8, **caractérisé en ce que** le deuxième corps élastomère (21) est une membrane d'équilibrage (22).

10. Support à amortissement hydraulique (10) selon l'une des revendications 8 ou 9, **caractérisé en ce que** le palier radial (18) présente une rigidité dans la direction Y qui est supérieure d'au moins un facteur 10 à sa rigidité dans la direction Z.

11. Support à amortissement hydraulique (10) selon l'une des revendications 8 à 10, **caractérisé en ce que** le palier axial (16) présente une rigidité dans la direction Z qui est supérieure d'au moins un facteur 2 à la rigidité du palier radial (18) dans la direction Z.

12. Support à amortissement hydraulique (10) selon l'une des revendications 5 à 11, **caractérisé en ce que** le premier corps en élastomère (15), le deuxième corps en élastomère (21) et/ou le troisième corps en élastomère (17) est relié au noyau (12) et/ou à la douille extérieure (42a, 42b, 42c) par une liaison par la forme, par une liaison par la force et/ou par une liaison par le matériau.
